# EUROPEAN PATENT APPLICATION

(11) **EP 3 232 129 A1**
(43) Date of publication of application: **18.10.2017**
(21) Application number: 16164717.7
(22) Date of filing: 11.04.2016
(51) Int. Cl.: F24F 11/00, G05B 13/02, G05B 13/04

(54) **METHOD AND SYSTEM FOR STEERING AN OPERATION OF AN INDOOR ENVIRONMENTAL CONTROL SYSTEM**

(71) Applicant: BSS Building Solution Service AB, 412 58 Göteborg (SE)
(72) Inventor: Rahe, Ulrike, SE-429 35 Kullavik (SE); Marx, Christian, SE-431 34 Mölndal (SE)
(74) Representative: Awapatent AB

(57) **Abstract**

The present invention discloses a method for steering an operation of an indoor environmental control system and such a system. The method comprising the steps of: a) assigning each workstation with a workstation ID, b) acquiring a time dependent set of input data comprising measurement data and/or feedback data from the plurality of interfaces for each workstation, and saving each set of input data in a record data, c) classifying each record data by comparing the respective set of input data with reference data to classify the record data into a predefined state, d) generating a database of states by repeating the above steps of acquiring and classifying over a time period, and for each repetition and for each workstation ID saving the corresponding predefined state, e) identifying patterns in the database of states, f) predicting the forthcoming predefined state for each workstation ID utilizing machine learning, g) based on said step of predicting, generate a control signal to said indoor environmental control system.

## Description

### Technical field

The present invention generally relates to the field of methods for steering the operation of an indoor environmental control system and to a system configured for adapting the indoor environmental condition to a plurality of workstations.

### Background art

Indoor environmental control systems are traditionally steered based on actual, i.e. instantaneous data, to reach desired levels regarding temperature, air quality, lighting, and etcetera. For example, a proportional-integral-derivate (PID) controller may be used to maintain the desired levels. Hence, if the properties measured are at an undesirable level, e.g. the temperature is too low, heating is activated in order to provide and maintain the corrected temperature. This of course leads to fluctuations in the temperature. For example, the temperature, air quality or lighting may fluctuate as the outdoor temperature, humidity, or light may indicate to the system that the level is undesirable. However, as this may happen at the transition from night to day when no persons are present in the working area, e.g. an office, but the control signal to the heating may be high due to relative cold outdoor conditions. This may lead to an undesirably e.g. high temperature as soon as people start working in the area and generate heat themselves.

Recent developments within field of indoor environmental control system often relate to the reduction of such aforementioned fluctuations as well as providing a more comfortable indoor environment for people working therein. It is sometimes desirable that the indoor environmental control system provides certain specific properties such as imitating e.g. daylight pattern as this affects the efficiency of people working.

US 2006/0184325, for example, involve the user when controlling the environmental control systems of a facility such as a building. US 2006/0184325 delineate a work area into private spaces, such as individual offices or cubicles. Sensors for detecting the environmental characteristics may be embedded in chairs, desks, lamps, filing cabinets or other pieces of furniture that may be in contact with the occupant. The user may provide input in order to operate the system of US 2006/0184325 to mimic daily patterns of e.g. daylight. Hence, the system utilizes user data and compares it with the measured data in order to adapt the control of the environmental control system. Further, the system may save the preferences of a user and adapt the environment accordingly. However, this still means that the system of US 2006/0184325 is reliant upon active user input via a survey to improve the environment and comfort for each individual.

Hence, there is still a desire to improve the state of the art to provide an improved method for steering the operation of an indoor environmental control system. For example, it may always be desirable to reduce, and/or efficiently tailor the energy consumption as well as improving the comfort of the users within the indoor area.

### Summary of the invention

It is an object of the present invention to improve the current state of the art, to alleviate at least some of the above problems, and to provide an improved method for steering an operation of an indoor environmental control system, and a system configured for adapting the indoor environmental condition to a plurality of workstations.

According to a first aspect of the present invention, a method for steering an operation of an indoor environmental control system configured for adapting the indoor environmental condition to a plurality of workstations, wherein each workstation comprises a plurality of interfaces, is provided. The method comprising the steps of:
a) assigning each workstation with a workstation ID,
b) acquiring a time dependent set of input data comprising measurement data and/or feedback data from the plurality of interfaces for each workstation, and saving each set of input data in a record data,
c) classifying each record data by comparing the respective set of input data with reference data to classify the record data into a predefined state,
d) generating a database of states by repeating the above steps of acquiring and classifying over a time period, and for each repetition and for each workstation ID saving the corresponding predefined state,
e) identifying patterns in the database of states,
f) predicting the forthcoming predefined state for each workstation ID utilizing machine learning,
g) based on said step of predicting, generate a control signal to said indoor environmental control system.

The present invention is based on the realization that by identifying patterns in the database of states and predicting the forthcoming pre-defined state for a workstation utilizing machine learning, energy and thus costs for e.g. heating, cooling, ventilation, etc. affecting environmental properties is tailored and/or saved. Additionally, or alternatively, the comfort of users within the area of application of the environmental control system may be improved through the prediction as the control signal to the indoor environmental control system may direct a workstation to be e.g. heated, cooled or lighted in advance of a user arriving or before feeling discomforted. Thereby, the method of the present invention is quicker to adapt to present and historical situation compared to the prior art and is able to correct a prediction if new patterns are observed. There is no need for a user to directly control or provide input to the system (i.e. to directly provide feedback data), although that may also be beneficial to improve the comfort.

Moreover, by using predefined states, and classifying each record data into a respective predefined state, which is used for generating the database of states, and subsequently to predict the forthcoming predefined state of the respective workstations, the method provides a way to freely adapt (i.e. in relation to the predefined state) and learn the desired settings of the respective workstation. Thus, the predefined states may be described as boundary conditions, such as boundary environmental conditions, which the method uses.

Furthermore, the predefined states allow for a convenient way to sort the input data, for example data from a plurality of sensors, and/or user input data, into a specific predefined state. Thus, a specific set of input data (i.e. a specific record data) may be agglomerated or accumulated into a specific predefined state which represents the specific environmental condition of a specific workstation at a certain point in time. For example, the input data may be weighted by a weighting function, to get a result value. The step of classifying the record data may then be carried out by comparing the result value to the predefined state. In other words, the predefined states may be correlated to a specific result value (or a specific range of result values).

It should be understood that a specific predefined state is typically adapted to represent environmental conditions at the workstation, which environmental conditions may be relatively similar to each other. For example, for a specific workstation where two different record data differ from each other by at least one relatively small variation in at least one value in the input data, the two different record data may be classified into the same specific predefined state. Thus, the specific predefined state represents both of the two, relatively similar environmental conditions. It should be noted that the environmental condition at a workstation is typically represented by the record data.

According to at least one example embodiment, a predefined state is defined by at least one pre-determined value, or a pre-determined range, of the reference data, which is correlated to the input data. According to at least one example embodiment, a predefined state is defined by a pre-determined value, or pre-determined ranges, of the reference data, which is correlated to a plurality of data from the input data.

It should be understood that a predefined state is typically affected by a set of measurement and feedback data in a (complex) environment where reaching specific predefined states in the surrounding area of a workstation, dynamically affect the present, localized, predefined state at that workstation. In other words, a predefined state is based on known comfort level of different parameters (for example, that the temperature should be 21 °C) in combination with seasonal effects (for example, winter time with heavy snow) and day time effects (for example, snow occurring during walking to work).

To clarify, the following example is given. In an office the standard temperature setting is 21°C and there is no office lighting active as standard. As long as the workstation is not occupied, the predefined state for that specific workstation would indicate something like "all good, no changes needed". As soon as a person occupies the workstation, the "presence change" as input data (from an interface, e.g. a sensor) overrides the actual measurement data and other indications. Hereby, a predefined state is evaluated that indicates for example: "the person would like to have a higher temperature and more light at the workstation", which will result in another predefined state. The difference between both mentioned predefined states can now be taken as a rating scheme for adapting to the personal needs. According to at least one example embodiment, the method comprises the step of comparing two subsequently occurring predefined states, and correlate the comparison (i.e. the difference between the two subsequently occurring predefined states) to the specific workstation and/or user/person at the specific workstation. Thus, the method may be adapted to specific preferences by taking into account the difference between subsequently occurring predefined states.

The "predefined" term in the "predefined states" indicates that the states are not stepless but rather that they include ranges which can lead the system to pick the same predefined state, for example, any measured temperature in the range of 20 - 22 °C may be rated similarly.

Furthermore, the explanation above indicates that the machine learning is not only applied on leveling out neighboring workstations but also to adapt predefined states.

In the following paragraph, the machine learning process is briefly described in an exemplified manner. The machine learning algorithm, also known as a machine learning program, collects large amounts of data and is constantly looking for patterns in this data. New patterns are stored and existing patterns are refined based on the continuous input of data. Data that doesn't adhere to any of the known or identified patterns are further investigated or analyzed as that means that something new, e.g. something unusual is happening, or that something usual is not happening (i.e. that for certain input, the expected outcome does not occur). In other words, a machine learning program calculates likely events and by doing this it can take the user's behavior patterns in consideration while calculating and analyzing the data. The program is constantly refined while running, which means that it gets better and better the more it is used. Sensors and other inputs send constant information to the program, which processes the information. A preferred example uses Prolog, a functional and logical programming language which can update its own code. The program doesn't need to be restarted when the new information is stored, and also provides the ability to apply parallel processes - reducing the risks of bugs, dead locks, and bottlenecks. Prolog is with other words very well suited for this type of applications. The program receives data which is stored in the internal database. Then a function is executed where data is matched against a list of statements, using backtracking. The more data that is stored in the internal database, the more exact matching could be required.

According to at least one example embodiment, the step of classifying each record data by comparing the respective set of input data with reference data comprises classifying the record data into at least two different predefined states. The at least two different predefined states may e.g. be related to different pre-determined settings, or pre-determined ranges, correlated to the input data.

The predefined states may according to one example embodiment incorporate various type of information, e.g. one or more of the following: seasonal boundary conditions, user statistics, the working area design, the type of work carried out at the workstations and accordingly observed work load flows, the workstation locations in the working area, the available indoor environmental control systems and their steerable capacities, the knowledge about comfort dynamics affecting the work/workstation performance and the individualization of all aspects mentioned above. In addition, current aspects at the workstations may impact on setting the predefined state, which includes measurement data and the occupancy of local and neighbouring workstations that may have another predefined state due to location, user, activity, occupancy of next workstation, etc. Thru this cascaded but interwoven process of assigning predefined states, the indoor environmental condition request of each workstation may be evaluated under a best achievable comfort aim.

In other words, and according to at least one example embodiment, background data and background information of behavioural environmental data (such as e.g. preferred ) is included in the predefined states.

The indoor environmental condition can also be referred to as indoor environmental condition dynamics, or indoor environmental behaviour, as the indoor environmental condition typically changes over time.

The workstation may e.g. be a desk, or any type of physical surface which may function as workstations, such as e.g. a computer stand, a coffee table, a table, etcetera.

Examples of interfaces for the workstation are sensors or sensor inputs, user input means such as e.g. indoor environmental quality parameter measurements, calendar data, weather data, design data such as e.g. distance of the specific workstation to windows, doors, social rooms, or other objects or facilities, and data acquired in different user survey/feedback processes. Furthermore, different sensors or sensors inputs and/or user inputs may be associated with, and processed thru, different interfaces. The interface may be interface to the workstation user and/or the workstations zone.

The record data may be associated to each workstation ID. The record data may preferably be time-stamped (i.e. each record data is associated with/acquired at a specific time, typically, year, month, day, hour, ,minute and second).

The classification may be achieved e.g. by weighing of the set of input data (such as e.g. sensor and user input data). It should be noted that the set of input data may comprise input data such as the individually preferred working height of e.g. a desk at the workstation or other referred conditions. According to at least one example embodiment, the input data comprises user input data.

The reference data may contain e.g. multipliers of the specific input data which normalize the input data. The reference data may alternatively contain e.g. conversion functions of specific input data for, for example, normalization. Furthermore, the reference data comprises reference values for the input data such that the input data may be compared to the reference data. Hence, the input data may be compared to the reference data in order to determine whether the input data reaches a threshold or the like. Thus, the reference data is typically correlated to, or is a reference to the measurement data and/or feedback data.

The database of states may include, for each workstation ID, the time varying predefined states. In other words, for each workstation ID the occurrence of the predefined states over a time is saved into the database.

Identifying patterns in the database of states may comprise identifying patterns over time. Patterns may evolve by a plurality of observations in the database of states. This can be the daily arrival time of workstation users, general user statistics, comparable relationships of indoor to outdoor environmental conditions regarding seasons, changes in the designed workstation landscape, and more. Therefore, the frequency, the duration and the level of re-occurrence of similar states and state sequences may comprise a pattern. Patterns may according to one example embodiment be the time dependent arrival of workstation users.

Hence, in an example, the varying occupation or use of a workstation may be tracked in order to identify a pattern over time when the workstation is occupied. Thereby, for example, the heating, air condition and lighting may be controlled accordingly. In another example, the varying environmental conditions of a workstation may be tracked in order to identify a pattern over time of different environmental conditions occurring at a workstation. Thereby, for example, the heating, air condition and lighting may be controlled accordingly.

Predicting the forthcoming predefined state for each workstation ID utilizing machine learning may comprise using a sub-set of data in the database of states. Alternatively, predicting the forthcoming predefined state for each workstation ID utilizing machine learning may comprise all data in the database of states. Hence, predicting the coming predefined state for each workstation ID utilizing machine learning may comprise utilizing any machine learning method or algorithm known in the art. Such algorithms may thereby e.g. identify which workstations that are related, for example by detecting that the input data changes for two or more different workstations at approximately the same time (i.e. almost simultaneously) leads to the deduction that those workstations are coupled. Further, the machine learning may predict when and whereby it is statistically likely that a predefined state for a workstation will change, and thereby, depending on the input data, that a control signal should be generated in order to adapt the indoor environmental conditions.

The generated control signal is typically used for the purpose of automated intervening and adapting measures e.g. the control signal could steer the heating system that the temperature should go up. The control signal may be used by any indoor environmental quality conditioning technologies or (possibly after translating it into a status information) include it in facility management systems. The control signal is based on the relation between the present predefined state, said average predefined state and the predicted forthcoming predefined state.

According to at least one example embodiment, the method comprises the step of providing the plurality of workstations. According to at least one example embodiment, the method comprises the step of, for each workstation, providing the plurality of interfaces.

The method may further comprise the step of continuously adapting the patterns of predefined states.

According to at least one example embodiment, the method comprises the step of determining from said database of states a time dependent average state from the predefined states for each workstation ID. This is typically carried out by calculating the time dependent average state. In other words, the method comprises the step of determining a time moving average of the predefined states for each workstation ID.

According to at least one example embodiment, the method further comprises the step of determining at least two neighbouring workstations IDs, and in the step of predicting the forthcoming predefined state for one of the two neighbouring workstations IDs, utilizing the identified pattern for the other one of the two neighbouring workstation IDs as additional input. Hereby, another advantage of the present invention should be realized as there is no need to identify the placement of workstations prior to implementing the method. Rather, the placement of workstations can be deduced by the method by identifying patterns in the prediction of the pre-defined states.

According to at least one example embodiment, at least one of the plurality of interfaces for a workstation comprises feedback data means for acquiring feedback data. According to at least one example embodiment, at least one of the plurality of interfaces for a workstation comprises measures for acquiring feedback data.

Thus, the method may comprise the step of providing at least one of the plurality of interfaces, wherein said at least one of the plurality of interfaces comprises feedback data means for acquiring feedback data. In other words, the method comprises the step of providing a feedback data means for acquiring feedback data.

The feedback data means or feedback data measures may comprise means for acquiring data from a facility system, for acquiring occupancy data (e.g. occupancy related to how many of the workstations that are occupied, to how a plurality of workstations is located in a first section of a building, such as a cluster of workstations in a first section of the building, are occupied in relation to another cluster of workstations located in a second section of the building, etc.), and for acquiring building managing data.

According to at least one example embodiment, at least one of the plurality of interfaces for a workstation comprises a sensor for acquiring measurement data. The sensor may be configured to measure and thus provide measurement data related to at least one of the following workstation zone parameter: temperature, relative humidity, humidity, sound level, CO₂ concentration, turbulence, or light. In at least one embodiment, the plurality of interfaces comprises a plurality of sensors.

Thus, the method may comprise the step of providing at least one of the plurality of interfaces, wherein said at least one of the plurality of interfaces comprises a sensor for acquiring measurement data. In other words, the method comprises the step of providing a sensor for acquiring measurement data.

According to at least one example embodiment, at least one of the plurality of interfaces for a workstation comprises a sensor for acquiring measurement data, and the method may comprise the step of providing the sensor for a workstation in a corresponding workstation zone, the workstation zone being defined as the space in proximity of the intended location of the user when working at the respective workstation. Thereby, sensors may be provided in both the workstation and the workstation zone.

According to at least one example embodiment, the method may further comprise the step of providing or arranging one or more sensors for a workstation in a corresponding workstation zone, the workstation zone being defined as the space in proximity of the intended location of the user when working at the respective workstation.

The workstation zone may also be referred to as a user zone. The workstation or user zone may be defined as a volume of 1 m³ to 4.2 m³ surrounding the intended location of the user when working at the workstation. For example, the volume of air surrounding the intended location of the user when working at the workstation is comprised in the workstation zone. The workstation zone may be seen as a sphere having a radius of approximately 0.6 m to 1 m. Thus, the user zone is where the user is experiencing the indoor environment when working at the workstation.

According to at least one example embodiment, the sensor is provided or arranged in a monitor zone, or measurement zone, which is comprised in the workstation zone. The monitor zone or the measurement zone may be smaller than the workstation zone. Accordingly, a plurality of sensor may be arranged in different monitor zones within the workstation zone. Thereby, different, or the similar, measurement may be made at measurement points spread within the workstation zone. That means that the measurement data may be provided as an average, or that measurement data may be provided from separated measurement points. For example, temperature may be measured above and below the workstation to determine the difference in temperature there between.

According to at least one example embodiment, the method may further comprise the step of providing the sensor in the workstation zone in such a way that the sensor is connected to, or arranged in, the workstation.

According to at least a second aspect of the present invention, a system configured for adapting the indoor environmental condition to a plurality of workstations is provided. The system comprises:
a control unit comprising a computer-readable medium with instructions for performing the method according to the first aspect of the invention.

Effects and features of this second aspect of the present invention are largely analogous to those described above in connection with the first aspect of the inventive concept. Embodiments mentioned in relation to the first aspect of the present invention are largely compatible with the second aspect of the invention, of which some embodiments are explicitly mentioned in the following.

The system comprises a control unit, which may alternatively be known as a processing unit or the like, for carrying out any of the steps in accordance with the first aspect of the invention.

According to at least one example embodiment, the system further comprises a plurality of interfaces assigned to each workstation.

According to at least one example embodiment, at least one of the plurality of interfaces for a workstation comprises a feedback data means for acquiring feedback data. According to at least one example embodiment, at least one of the plurality of interfaces for a workstation comprises a sensor for acquiring measurement data.

According to at least one example embodiment, the sensor for a workstation is arranged in a corresponding workstation zone, the workstation zone being defined as the space in proximity of the intended location of the user when working at the respective workstation. The workstation zone may also be referred to as a user zone. The workstation or user zone may be defined as a volume of between 1 m³ to 4 m³ surrounding the intended location of the user when working at the workstation. For example, the volume of air surrounding the intended location of the user when working at the workstation. That is, for a sphere having a radius of approximately 0.6 m to 0.9 m. Thus, the user zone is where the user is experiencing the closest indoor environment.

According to at least one example embodiment, the sensor in the workstation zone is connected to, or arranged in, the workstation.

According to at least one example embodiment, the system further comprises a connection means to a heating, a ventilation and/or an air-conditioning system.

According to at least one example embodiment, the system further comprises a heating, a ventilation and/or an air-conditioning system.

According to at least one example embodiment, the system comprises the plurality of workstations. At least one of said plurality of workstations may be a desk.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Figure 1 is a flow chart outlining an exemplary method of the invention;
Figure 2 is a schematic view of a system embodying at least one example of the invention; and
Figure 3a-c are schematic views of an office space and a workstation in which the invention may be utilized.

### Detailed description of preferred embodiments of the invention

In the present detailed description, embodiments of a method for controlling an operation of an indoor environmental control system configured for adapting the indoor environmental condition to a plurality of workstations are mainly discussed with reference schematic views showing flowcharts and exemplary systems according to various embodiments of the invention. It should be noted that this by no means limits the scope of the invention, which is also applicable in other circumstances for instance with other types or variants of methods or systems than the embodiments shown in the appended drawings. Note that specific components or steps which are mentioned in connection to an embodiment of the invention may to an advantage be used together with other embodiments of the invention.

The method may be performed by a control unit, or processing unit, which may be an electronic device, which processes sensor signals and, in dependence thereon, outputs control signals.

The general concept of the present invention may typically be implemented in a computer system, including a general purpose processor, an application specific processor, a circuit containing processing components, a group of distributed processing components, a group of distributed computers configured for processing, etc. The control unit may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory, such that the memory is non-transitory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the control unit (e.g., via a circuit or any other wired, wireless, or network connection) and includes computer code for executing one or more processes described herein.

The general functionality of the systems and methods may also and/or alternatively be provided in a distributed environment. In such an implementation, the system may be configured to comprise a user controlled computing device (e.g. a user controlled personal computer or mobile device) connected to a server/database arrangement over the Internet. Accordingly, resources for performing the inventive concept may typically be divided between the computing device and the server/database arrangement.

Further to reduce the hardware constrains on local computing device(s), the method could be performed "on-demand" provide a user/customer with the functionality provided by means of the inventive concept. As an example, the input data and classification may be performed by a computer implementation of the method running on a server. Alternatively, the local implementation may be provided with software for performing a portion of the classification, where the software running on the computing device is adapted to access/interact with (by means of e.g. an API and "on-demand", as a subscription, as a fixed service, etc.) a computer implementation of the inventive concept running on a server for performing the, possibly, more computationally heavy prediction steps.

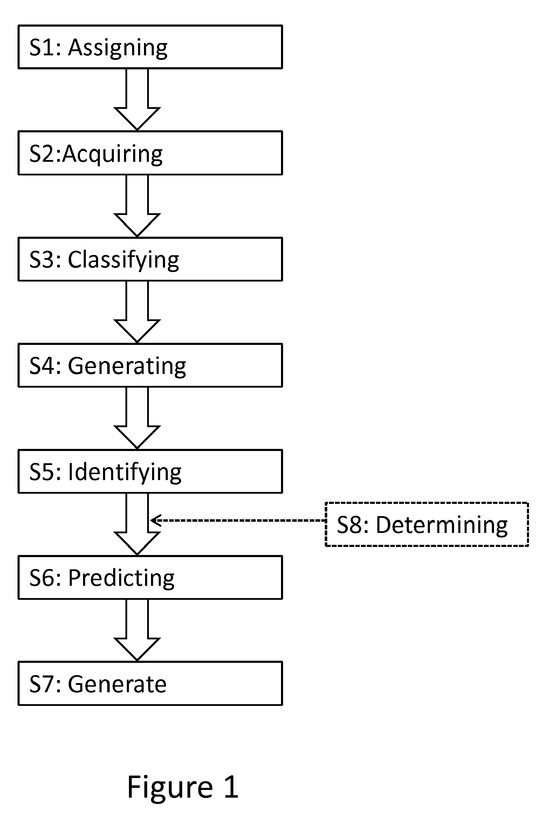

Figure 1 is a flow chart outlining an exemplary method of the invention. The method is used in conjunction with a plurality of workstations, wherein each workstation comprises a plurality of interfaces. The workstation may e.g. be a desk, or any type of physical surface which may function as a workstation, such as e.g. a computer stand, a coffee table, a bench, etcetera. An interface may be one or more sensors, and feedback data means may e.g. be means in which a user may input preferences. The first step, S1, comprises assigning each workstation with a workstation ID. Thereby, each workstation may be identified and correlated to input data arising from that particular workstation. Stated differently, the input data, i.e. measurement data and/or feedback data, arising from interfaces coupled to a specific workstation is tagged with a workstation identifier such that the input data can be correlated with the specific workstation.

The second step, S2, comprises acquiring a time dependent set of input data comprising measurement data and/or feedback data from the plurality of interfaces for each workstation, and saving each set of input data in a record data. Table 1 below is an example of how measurement data from sensor may be stored and correlated to each workstation as separate record IDs.

**Table 1**

| Workstation ID | Record ID | Time stamp | T (C°) | rH (%) | CO₂ (ppm) |
|---|---|---|---|---|---|
| xx234 | 1 | yyyy-mm-hh-hh:mm:ss | 15 | 40 | 200 |
| Ax175 | 2 | yyyy-mm-hh-hh:mm:ss | 16 | 45 | 330 |
| Gb220 | 3 | yyyy-mm-hh-hh:mm:ss | 21 | 55 | 450 |
| Xk122 | 4 | yyyy-mm-hh-hh:mm:ss | 21 | 59 | 510 |

Note that time stamps are used to identify the record IDs in order to be able to evaluate the time dependency of the measurement data and/or the feedback data. Hence, the time dependency may be used for later processing. The interfaces, e.g. sensors and/or feedback data means, may be configured to only report measurement data and/or feedback data when changes occur. Thereby, the bandwidth and data which needs to be transported is reduced, and the latency of the system and system data processing requirements are reduced. Further, as there may be less data to process the subsequent steps may be performed more quickly. Alternatively, measurement data may be configured to be reported in set intervals such as hours, minutes or seconds which increases the time dependent resolution.

The next step, S3, comprises classifying each record data by comparing the respective set of input data with reference data to classify the record data into a predefined state. As seen in Table 2 below, each record ID is classified using one or more classifiers (A-C) into a predefined state. The predefined state may be e.g. an occupied, soon to be occupied, or unoccupied setting. Furthermore, the indoor environmental condition in that specific single workstation zone (which is a major factor affecting the felt comfort) may simultaneously be influenced by present and estimated occupancy in neighboring workstation zones. The predefined states may thus be described as indicators for achievable work performance levels.

The one or more classifiers may be used in order to classify measured values with respect to comfort, quality and/or other factors. Several classifiers may be used and a mean classification provided as the result. Alternatively, the different classifiers may be weighed based on their accuracy for the determination of the final classification result. If only one classifier is used, the selection of the classifier may be based on which data is available. The reference data may contain e.g. multipliers of the specific input data for normalization purposes. Further, the reference data may comprise reference values for the input data such that the input data may be compared to the reference data. For example, classifier A below comprises multipliers for the input data, in this case measurement data, which is then compared to the reference data value of A to classify whether the record ID is in the predefined state determined by the classifier A or not. It is possible that more than one classifier relate to a specific predefined state, such that classifier A may only classify predefined state X1, but classifier B may classify both predefined state X1 and X2, for example. As seen in the example in Table 2 below, classifiers A-C are used for each one of three (3) different RecordIDs to obtain the predefined state (a fourth row representing a fourth RecordID is also present to indicate that more RecordIDs may be processed simultaneously or subsequently).

**Table 2**

| Record ID | Classifier A | Classifier B | Classifier C | Result | Predefined |
|---|---|---|---|---|---|
| | = c1*Ti + | = c5*DY + | = c8*P + | | state |
| | c2*rH | c6*DW + | c9*To | | |
| | + c3*L + c4*SL | c7*To | | | |
| 1 | 0.82 | 0.75 | 0.10 | 1.67 | X1 |
| 2 | 0.80 | 0.45 | 0.30 | 1.55 | X2 |
| 3 | 0.69 | 0.62 | 0.40 | 1.71 | X1 |
| 4 | ... | ... | ... | ... | ... |

In the example given in Table 2, DY represents day of the year, DW represents day of the week, L represents visible light irradiance in W/m2, P represents precipitation in mm, rH represents relative humidity in %, SL represents sound level in dB, Ti represents indoor temperature in °C, and To represents outdoor temperature in °C. More, less and/or other parameters and type of classifiers are course conceivable within the scope of the invention.

Each classifier A-C in Table 2 includes set coefficients and further input parameters (such as e.g. measured and/or feedback data) that are used to compute unitless and normalized values. These values are then again processed, e.g. in the simplest way added, otherwise weighted by additional weighing factors. The Result value assigns a record ID to a predefined state as previously described. The formulas, the included parameters (measured and/or feedback), the amount of considered classifiers, and the combinations of classifiers used to assign record IDs to predefined states may vary and be adapted to the area of application. Furthermore, both the coefficients being used for the classifiers and the weighing factors may be adapted dynamically (due to e.g. a machine learning procedure described elsewhere in this patent application). In other words, historic Result values may point to a specific predefined state, while almost identical but actual Result values can point to another predefined state due to the result of the machine learning process and computational adaptation and change of weighting in between.

The predefined states allow for a convenient way to sort the input data. A specific set of input data (i.e. a specific record data) may be agglomerated into a specific predefined state, which represents the specific environmental condition of a specific workstation at a certain point in time. For example, the input data may be weighted by a weighting function, to get a result value. The step of classifying the record data may then be carried out by comparing the result value to the predefined state. In other words, the predefined states may be correlated to a specific result value (or a specific range of result values) as described above.

A specific predefined state is typically adapted to represent environmental conditions at the workstation, which are relatively similar to each other. For example, for a specific workstation where two record data differ from each other by at least one relatively small variation in at least one parameter in the input data, the two different record data may be classified into same specific predefined state. Thus, the specific predefined state represents both of the two, relatively similar environmental conditions. It should be noted that the environmental condition of a workstation is typically represented by the record data.

A predefined state may be defined by at least one pre-determined value, or a pre-determined range, of the reference data, which is correlated to the input data. According to at least one example embodiment, a predefined state is defined as a pre-determined value, or pre-determined ranges, of the reference data, which is correlated to a plurality of data (readings) from the input data.

According to at least one example embodiment, the step of classifying each record data by comparing the respective set of input data with reference data comprises classifying the record data into at least two different predefined states. The at least two different predefined states may e.g. be related to different pre-determined settings, or pre-determined ranges, correlated to the input data.

The next step, S4, comprises generating a database of states (not shown) by repeating the previous steps of acquiring and classifying over a time period, and for each repetition and for each workstation ID saving the corresponding predefined state. Thereby, a time dependent database of classified record IDs linked to each workstation ID is created such that analysis may be performed on any of the therein elements.

The next step, S5, comprises identifying patterns in the database of states. For example, a statistical generation of a database of predefined states using the number of observed cases for each classification may be performed and the results returned to the workstation ID. The actual measurements and calculated weights may be used to "cluster" the results of the predefined states and record IDs to the particular workstation. This provides a high resolution of the event history (i.e. the changing of the predefined state for each workstation). Hence, the method may automatically adapt to any office design, or office space design, and any indoor environmental behaviour.

An example of a database of states is shown in Table 3 below. As illustrated in Table 3, the record IDs belonging to each classification, that is predefined state, may be clustered (cluster of predefined states X1-X4 below). From each cluster of predefined states, a pattern may thus be identified by correlating the time dependency of the predefined state. Alternatively, the frequency of re-occurring states, statistic, duration and level of the states may comprise a pattern. As indicated by the empty fields (...) in Table 3 (i.e. rows 2-4), several similar process steps may be carried out for other workstations, either subsequently or simultaneously.

**Table 3**

| Workstation ID | Cluster of predefined | Cluster of predefined | Cluster of predefined | Cluster of predefined |
|---|---|---|---|---|
| | state X1 | state X2 | state X3 | state X4 |
| xx234 | Record IDs 1,2 , 700, 187,... | Record IDs 303-406 | ... | ... |
| Ax175 | ... | ... | ... | ... |
| Gb220 | ... | ... | ... | ... |
| Xk122 | ... | ... | ... | ... |

The next step, S6, comprises predicting the forthcoming predefined state for each workstation ID utilizing machine learning, and the subsequent step, S7, comprises to generate a control signal to the indoor environmental control system based on the step S6 of predicting. The prediction may be based on a sub-set of data in the database of states. Alternatively, predicting the forthcoming predefined state for each workstation ID utilizing machine learning may comprise all data in the database of states. The machine learning algorithms may thereby e.g. identify which workstations that are related, for example by detecting that the input data changes for two or more different workstations at approximately the same time and deducing that those workstations are coupled and are highly likely to be arranged close to each other in an office space. Further, the machine learning can predict when and whereby it is statistically likely that a predefined state for a workstation will change, and thereby, depending on the input data, that a control signal should be generated in order to adapt the indoor environmental conditions.

The control signal is typically used for the purpose of automated intervening and adapting measures e.g. the control signal could be a signal to the heating system that the temperature shall go up. The control signal may be used by any indoor environmental quality conditioning technologies or facility system, e.g. a facility monitoring system. The control signal may be based on the relation between the present predefined state, said average predefined state and the predicted forthcoming predefined state.

Table 4 shows an example of arranging the data from the prediction and generation of a control signal steps, S6 and S7 respectively. The workstation actual cluster is determined, i.e. the current predefined state (indicated by "Actual" in Table 4), the average cluster, i.e. the average predefined state (indicated by "Average" in Table 4), for the workstation has been determined previously and a predicted predefined state (indicated by "Predicted" in Table 4) is based on the prediction step and pattern identification performed previously. The difference (indicated by "Difference" in Table 4) may also be determined, if needed, in order to generate an action such as a control signal (indicated by "Action" in Table 4). In the example on the first row of Table 4, the control signal is a rise in temperature. This may be the case if predefined state X1 corresponds to unoccupied and low temperature, and predefined state X2 is occupied including applied heating leading to a comfortable temperature, whereas predefined state X3 is occupied but no heating applied as the temperature may be maintained by body heat as the workstation is occupied. In other words, statistical analyses of the databases of states for the specific workstation may compute an "average cluster" of the predefined state for a workstation. From that analysis a time-dependent prediction of the forthcoming predefined state is made. A calculation and/or analysis of difference D between actual, average and predicted predefined state thus enable a deduction of which control signal should be generated to the indoor environmental control system in order to increase comfort or save energy. As indicated in Table 4 (i.e. rows 2-4), several similar process steps may be carried out, either subsequently or simultaneously.

**Table 4**

| Workstation ID | Actual | Average | Predicted | Difference | Action |
|---|---|---|---|---|---|
| xx234 | X1 | X3 | X2 | D | T=↑ |
| Ax175 | ... | ... | ... | ... | ... |
| Gb220 | ... | ... | ... | ... | ... |
| Xk122 | ... | ... | ... | ... | ... |

An optional step of the method comprises providing the plurality of workstations having a plurality of interfaces. Hence, the method may also comprise arranging or providing the feedback data means and/or a sensor or plurality of sensors such that they can measure data relevant to the workstation.

In an alternative embodiment, the method further comprises the step S8 of determining at least two neighbouring workstations IDs, and in the step of predicting the forthcoming predefined state for one of the two neighbouring workstations IDs, utilizing the identified pattern for the other one of the two neighbouring workstation IDs. Determining that at least two workstations are neighbouring may comprise identifying patterns that the predefined states of the workstations are correlated over time, e.g. from the Table 3 database representation. Hereby, another advantage of the present invention should be realized as there is no need to identify the placement of workstations prior to implementing the method. Rather, the placement of workstations can be deduced by identifying patterns in the prediction of the pre-defined states. Thereby, the prediction and thus the control signal may be influenced by the data from another neighbouring workstation in order to increase comfort or save energy.

In an alternative embodiment, the method further comprises the step of acquiring weather prediction data and utilizing the weather prediction data to adapt the generation of the control signal(s). Hence, the control signal(s) may be adapted based on the predicted outside temperature for example.

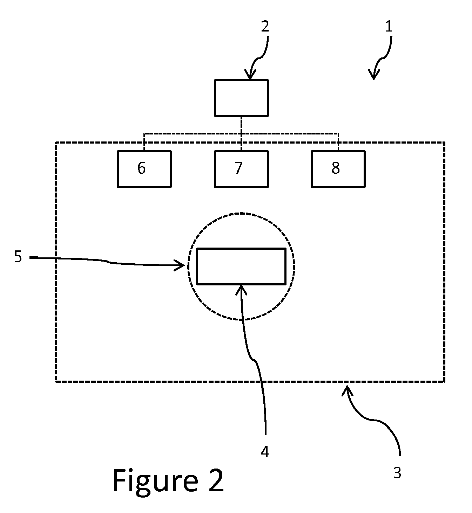

Figure 2 shows an exemplary system 1 in which the invention may be embodied. The system comprises a control unit 2, and an office space 3 in which a workstation 4 is placed. The office space may be a single room, a cubicle, or an area where several other workstations are placed (although not shown in Figure 2). The workstation 4 has a workstation zone 5, which is the space in proximity of the intended location of a user when working at the workstation 4. The workstation zone 5 may be interpreted as a sphere with a radius of 0.6 to 1 m.

Sensors may alternatively be provided or arranged in a monitor zone, or measurement zone, which is comprised in the workstation zone 5. The monitor zone, or the measurement zone, is smaller than the workstation zone. Accordingly, a plurality of sensor may be arranged in different monitor zones within the workstation zone. Thereby, different, or the similar, measurement may be made at measurement points spread within the workstation zone. That means that the measurement data may be provided as an average, or that measurement data may be provided from separated measurement points.

The workstation 4 comprises a plurality of interfaces (not shown) such as sensors or feedback data means discussed above.

The control unit 2 may alternatively be known as a processing unit or the like. The control unit 2 processes sensor signals and possibly feedback data and, in dependence thereon, outputs control signals. The control unit 2 may comprise a data interface for input or output data, which may be configured in hardware and/or in software. In the case of a configuration in hardware, these data interfaces may, for example, be part of a so-called system ASIC, which comprises diverse functions of the control unit 2. However, it is also possible that the interfaces are individual, integrated circuits or at least partially consists of discrete components. In the case of a configuration in software, the data interfaces may be software modules, which may be provided on a microcontroller next to other software modules, for example. The data interfaces of the control unit 2 are connected via any known means (wired or wireless) to the interfaces comprised in the work station 4.

The control unit 2 is also connectable, as indicated by the dashed lines, to a heating unit 6, an air condition unit 7, and a lighting unit 8. It is noted that the skilled addressee realizes that the control unit 2 may be connected to other types of units, or that the above noted heating unit 6, air condition unit 7, and lighting unit 8 may encompass facility controls such as curtains, blinds, floor heating, humidifiers and the like.

In use, the control unit 2 is configured to perform the method above, i.e. assign the workstation 4 (or each of a plurality of workstations) with a workstation ID, acquire a time dependent set of input data comprising measurement data and feedback data from the plurality of interfaces for the workstation 4, and saving each set of input data in a record data. Further, the control unit 2 classifies each record data by comparing the respective set of input data with reference data to classify the record data into a predefined state and generates a database of states by repeating the acquiring and classifying over a time period, and for each repetition saves the corresponding predefined state for the workstation 4. Thereafter, the control unit 2 identifies patterns in the database of states and predicts the forthcoming predefined state for the workstation 4 by using machine learning algorithms.

The control unit 2 then generates and outputs a control signal to the appropriate indoor environmental control system, i.e. one or more of the heating unit 6, air condition unit 7, and lighting unit 8, based on the predicted state of the workstation 4.

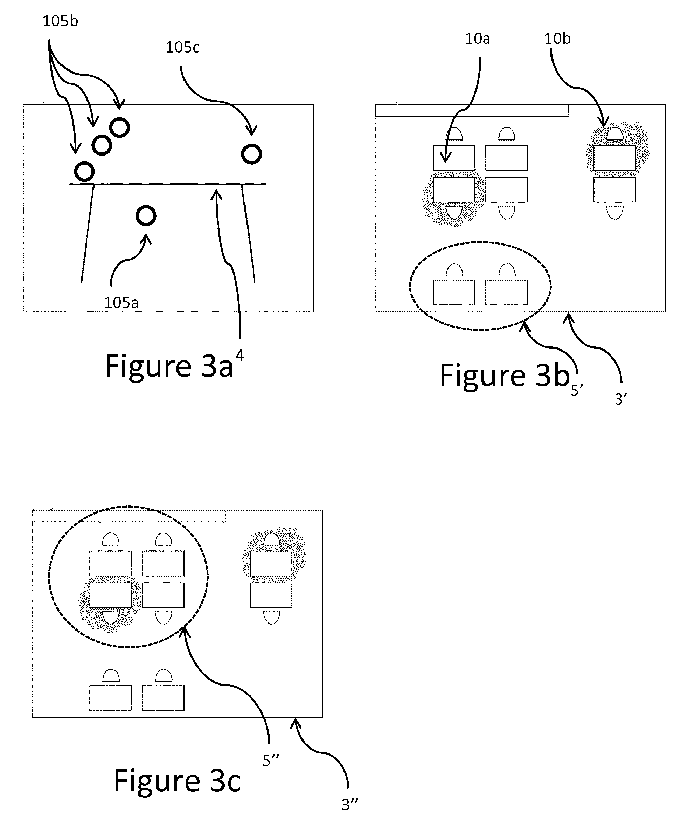

Figure 3a illustrates a workstation 4, therein in the form of a desk 4. The desk 4 comprises several sensors (105a-105c) which measure different quantities or parameters related to the comfort of a user and/or energy consumption of the indoor environmental control system. The sensors may e.g. measure data related to temperature, relative humidity, sound level, CO₂ concentration, turbulence, and/or light.

Figure 3b illustrates an office space 3' in which a plurality of workstations are provided. In such an office space 3' the control unit 2 (shown in figure 1) may be configured to determine at least two neighbouring workstations IDs, and in the step of predicting the forthcoming predefined state for one of the two neighbouring workstations IDs, utilize the identified pattern for the other one of the two neighboring workstation IDs. For example, as shown in figure 3b, the two workstations in the lower left corner are treated as the same workstation zone 5' and can therefore be provided with the same predicted state, i.e. the predicted state for the two workstations is identical. The determination that at least two workstations are neighboring may comprise configuring the control unit 2 to identify patterns that the predefined states of the workstations in the lower left corner are correlated over time. Hence, there is no need to identify the placement of workstations prior to implementing the control unit 2. Rather, the placement can be deduced by the control unit 2 by identifying patterns in the prediction of the pre-defined states. Thereby, the prediction and thus the control signal from the control unit 2 may be influenced by the data from another neighbouring workstation in order to increase comfort or save energy. Further, by computationally treating the two workstations in the lower left corner as one workstation zone there are less computations for the control unit 2 to perform in order to predict and output a control signal.

Figure 3c illustrates an office space 3" in which a plurality of workstations are provided similar to the example in figure 3b. The difference is that the control unit 2 therein grouped the four desks in the upper left corner as a single workstation zone 5".

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for steering an operation of an indoor environmental control system configured for adapting the indoor environmental condition to a plurality of workstations, wherein each workstation comprises a plurality of interfaces, the method comprising the steps of:
a) assigning each workstation with a workstation ID,
b) acquiring a time dependent set of input data comprising measurement data and/or feedback data from the plurality of interfaces for each workstation, and saving each set of input data in a record data,
c) classifying each record data by comparing the respective set of input data with reference data to classify the record data into a predefined state,
d) generating a database of states by repeating the above steps of acquiring and classifying over a time period, and for each repetition and for each workstation ID saving the corresponding predefined state,
e) identifying patterns in the database of states,
f) predicting the forthcoming predefined state for each workstation ID utilizing machine learning,
g) based on said step of predicting, generate a control signal to said indoor environmental control system.

2. The method according to claim 1, comprising the step of determining from said database of states a time dependent average state from the predefined states for each workstation ID.

3. The method according to any one of the preceding claims, comprising the step of determining at least two neighbouring workstations IDs, and in the step of predicting the forthcoming predefined state for one of the two neighbouring workstations IDs, utilizing the identified pattern for the other one of the two neighbouring workstation IDs.

4. The method according to any one of the preceding claims, wherein at least one of the plurality of interfaces for a workstation comprises a feedback data means.

5. The method according to any one of the preceding claims, wherein at least one of the plurality of interfaces for a workstation comprises a sensor.

6. The method according to claim 5, further comprising the step of providing the sensor for a workstation in a corresponding workstation zone, the workstation zone being defined as the space in proximity of the intended location of the user when working at the respective workstation.

7. The method according to claim 6, further comprising the step of providing the sensor in the workstation zone in such a way that the sensor is connected to, or arranged in, the workstation.

8. A system configured for adapting the indoor environmental condition to a plurality of workstations, the system comprising:
a control unit comprising a computer-readable medium with instructions for performing the method of any one of claims 1-7.

9. The system according to claim 8, further comprising a plurality of interfaces assigned to each workstation.

10. The system according to claim 9, wherein at least one of the plurality of interfaces for a workstation comprises a feedback data means for acquiring feedback data.

11. The system according to any one of claims 9-10, wherein at least one of the plurality of interfaces for a workstation comprises a sensor for acquiring measurement data.

12. The system according to claim 11, wherein the sensor for a workstation is arranged in a corresponding workstation zone, the workstation zone being defined as the space in proximity of the intended location of the user when working at the respective workstation.

13. The system according to claim 12, wherein the sensor in the workstation zone is connected to, or arranged in, the workstation.

14. The system according to any one of claims 8-13, further comprising connection means to a heating, a ventilation and/or an air-conditioning system.

15. The system according to any one of claims 8-14, further comprising the plurality of workstations.
